# EUROPÄISCHE PATENTSCHRIFT

(11) **EP 4 352 584 B1**
(45) Veröffentlichungstag und Bekanntmachung des Hinweises auf die Patenterteilung: **05.03.2025**
(21) Anmeldenummer: 22741702.9
(22) Anmeldetag: 28.06.2022
(51) Int. Cl.: G05D 1/00

(54) **VERFAHREN ZUR BESTIMMUNG EINER AKTIONSSTRATEGIE EINES IM AUTOMATISIERTEN FAHRBETRIEB FAHRENDEN FAHRZEUGES**
METHOD FOR DETERMINING AN ACTION STRATEGY OF A VEHICLE DRIVING IN AUTOMATED DRIVING OPERATION
PROCÉDÉ DE DÉTERMINATION D'UNE STRATÉGIE D'ACTION D'UNE CONDUITE DE VÉHICULE DANS UNE OPÉRATION DE CONDUITE AUTOMATISÉE

(30) Priorität: 30.07.2021 DE 102021003918
(43) Veröffentlichungstag der Anmeldung: 17.04.2024
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2022/067676
(87) Internationale Veröffentlichungsnummer: WO 2023/006317

(56) Entgegenhaltungen:
- WO-A1-2021/059715
- US-A1- 2021 094 567
- US-B1- 8 996 224

## Beschreibung

Die Erfindung betrifft ein Verfahren zur Bestimmung einer Aktionsstrategie eines im automatisierten Fahrbetrieb fahrenden Fahrzeuges bei einer Annäherung an ein auf seiner Fahrspur stehendes vorderes Fahrzeug.

Aus der DE 10 2018 006 949 A1 ist ein Verfahren zum fahrerlosen Betrieb eines Fahrzeuges bekannt. Bei Auftreten einer Blockadesituation wird basierend auf einer Situationsanalyse eine voraussichtliche Blockadezeitdauer prädiziert. Dabei wird eine Unterstützung durch einen Teleoperator angefordert, wenn die prädizierte Blockadezeitdauer der Blockadesituation größer ist als eine vorgegebene Zeitdauer oder wenn das Fahrzeug länger als die prädizierte Blockadezeitdauer auf eine Auflösung der Blockadesituation gewartet hat.

Aus der US 2021/094 567 A1 ist ein Verfahren zum autonomen Betrieb eines Fahrzeugs bekannt, bei dem vorgesehen ist, dass das Fahrzeug Unterstützung von einem Teleoperator anfordert, wenn es länger als eine vorgegebene Zeitdauer hinter einem anderen Fahrzeug angehalten hat.

Aus der WO 2021/059 715 A1 ist ein Verfahren zum Betrieb eines selbstfahrenden Fahrzeugs bekannt, bei dem vorgesehen ist, dass Daten über das Fahrzeug zu einem Teleoperator übertragen werden, wenn das Fahrzeug länger als eine vorgebbare Zeitdauer angehalten hat.

Aus der US 8 996 224 B1 ist ein Verfahren zum autonomen Betrieb eines Fahrzeugs bekannt, bei dem vorgesehen ist, dass eine Unterstützungsanfrage an ein Servicecenter sendet, wenn das Fahrzeug länger als eine vorgebbare Zeitdauer mit einer unter einem Schwellwert liegenden Geschwindigkeit fährt.

Der Erfindung liegt die Aufgabe zugrunde, ein Verfahren zur Bestimmung einer Aktionsstrategie eines im automatisierten Fahrbetrieb fahrenden Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Bestimmung einer Aktionsstrategie eines im automatisierten Fahrbetrieb fahrenden Fahrzeuges bei einer Annäherung an ein auf seiner Fahrspur stehendes vorderes Fahrzeug sieht erfindungsgemäß vor, dass das Fahrzeug hinter dem stehenden vorderen Fahrzeug anhält und mit einer Fortsetzung seines Fahrbetriebes solange wartet, bis das vordere Fahrzeug anfährt oder bis eine vorgegebene Wartezeit verstrichen ist. Wenn ein Warten des Fahrzeuges die vorgegebene Wartezeit überschreitet, leitet das Fahrzeug ein Überholmanöver zum Überholen des vorderen Fahrzeuges ein, fordert eine Unterstützung durch einen Teleoperator an und/oder gibt eine Übernahmeaufforderung einer Fahraufgabe an einen Fahrzeugnutzer des Fahrzeuges aus. Die vorgegebene Wartezeit wird dabei unter Berücksichtigung eines Abstands des Fahrzeugs zu einer Kreuzung ermittelt wird, wobei angenommen wird, dass sich vor dem vorderen Fahrzeug eine Reihe weiterer Fahrzeuge befindet, wenn der Abstand des Fahrzeugs zu der Kreuzung einen vorgegebenen Schwellwert unterschreitet, und wobei die vorgegebene Wartezeit vergrößert wird, wenn diese Annahme getroffen wird.

Durch Anwendung des Verfahrens berücksichtigt das automatisiert fahrende Fahrzeug eine Warteschlange an einer Kreuzung und wartet dort für eine angemessene Wartezeit. Das Fahrzeug führt zunächst, d. h. während der Wartezeit kein Überholmanöver in Bezug auf das vordere Fahrzeug durch, so dass für das Fahrzeug nicht das Risiko besteht, dass es im Gegenverkehr steht, da sich vor dem vorderen Fahrzeug von dem Fahrzeug nicht erkannte weitere Fahrzeuge befinden, die an der Kreuzung warten.

In einer Ausführungsform wird die Wartezeit in Abhängigkeit von einer Umgebungssituation des Fahrzeuges vorgegeben, so dass beispielsweise bei einer Ermittlung, dass dem Fahrzeug und dem vorderen Fahrzeug keine Kreuzung vorausliegt, davon ausgegangen werden kann, dass das vordere Fahrzeug parkt und das Fahrzeug daraufhin nach Ablauf der vorgegebenen Wartezeit ein Überholmanöver einleitet.

Eine Umgebungssituation wird in einer Weiterbildung des Verfahrens auf ein Vorliegen von Indizien hin überprüft, die daraufhin deuten, dass das vordere Fahrzeug das Ende einer zum Stehen gekommenen Reihe von weiteren Fahrzeugen bildet und es sich somit um eine Warteschlange handelt, aufgrund welcher das Fahrzeug steht. Ein Umfahren des vorderen Fahrzeuges wird aus diesem Grund nicht eingeleitet.

Werden in einer weiteren Ausführungsform derartige Indizien aufgefunden, wird ein Korrekturwert für die Wartezeit in Abhängigkeit der aufgefundenen Indizien bestimmt und die Wartezeit für das Fahrzeug wird um den Korrekturwert verlängert. Das Fahrzeug reiht sich also in die Warteschlange ein und ein Überholmanöver des Fahrzeuges in Bezug auf das vordere Fahrzeug wird nicht eingeleitet und die Wartezeit wird situativ an die vorliegenden Indizien angepasst.

Wenn anhand des Abstands des Fahrzeugs zur Kreuzung ermittelt wird, dass das vordere Fahrzeug am Ende der Reihe der weiteren Fahrzeuge steht, ist in einer möglichen Ausbildung des Verfahrens vorgesehen, dass sich das Fahrzeug in der Reihe einreiht und ein Überholmanöver zum Überholen des vorderen Fahrzeuges nicht eingeleitet wird.

Eine mögliche Weiterbildung sieht vor, dass die Wartezeit in Abhängigkeit von dem Fahrzeug zur Verfügung stehenden Verkehrsinformationen ermittelt wird. So kann die Verkehrssituation beispielsweise eine Staumeldung beinhalten, so dass sich das Fahrzeug auf eine längere Wartezeit einstellen kann, gegebenenfalls den Teleoperator kontaktiert und/oder ein Fahrzeugnutzer zur Übernahme einer Fahraufgabe aufgefordert wird.

In einer weiteren möglichen Ausbildung werden dem Fahrzeug über eine Fahrzeug-zu-Fahrzeugkommunikation und/oder über eine Fahrzeug-zu-Infrastrukturkommunikation Informationen zu einer Länge der Reihe der wartenden weiteren Fahrzeuge und/oder eine Länge einer prognostizierten Wartezeit übermittelt. Diese prognostizierte Wartezeit kann dann fahrzeugseitig hinterlegt werden. Wird erfasst, dass das vordere Fahrzeug nach Ablauf der prognostizierten Wartezeit, beispielsweise zuzüglich einer vorgegebenen Pufferzeit, nicht anfährt, kann erneut eine Abfrage zu vorliegenden Verkehrsinformationen und/oder Informationen zu der Länge der Reihe der weiteren Fahrzeuge durchgeführt werden. Entweder wird die Wartezeit korrigiert oder der Teleoperator wird kontaktiert und/oder es wird die Übernahmeaufforderung in dem Fahrzeug ausgegeben.

Ausführungsbeispiele der Erfindung werden im Folgenden anhand von Zeichnungen näher erläutert.

Dabei zeigen:
- Fig. 1: schematisch eine Verkehrssituation mit einem im automatisierten Fahrbetrieb auf eine Warteschlange an einer Kreuzung zufahrendes Fahrzeug und
- Fig. 2: schematisch die Verkehrssituation mit dem im automatisierten Fahrbetrieb auf die Warteschlange zufahrende Fahrzeug bei Anwendung eines erfindungsgemäßen Verfahrens.

Einander entsprechende Teile sind in allen Figuren mit den gleichen Bezugszeichen versehen.

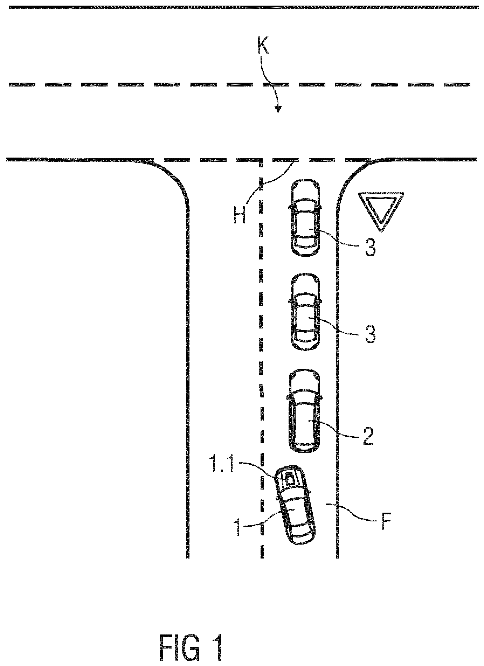

Figur 1 zeigt eine Verkehrssituation mit einem im automatisierten Fahrbetrieb fahrenden Fahrzeug 1, welches auf ein in seiner Fahrspur F stehendes vorderes Fahrzeug 2 zufährt, vor dem sich weitere Fahrzeuge 3 befinden. Die weiteren Fahrzeuge 3 und das vordere Fahrzeug 2 stehen an einer vorfahrtgeregelten Kreuzung K und warten darauf, die Kreuzung K passieren zu können.

Das Fahrzeug 1 fährt also auf das stehende vordere Fahrzeug 2 zu und hält an. Dabei wartet das Fahrzeug 1 üblicherweise solange, bis das vordere Fahrzeug 2 anfährt. Wird jedoch eine vorgegebene Wartezeit überschritten und das vordere Fahrzeug 2 fährt nicht an, leitet das Fahrzeug 1 automatisch ein Überholmanöver ein, um an dem vorderen Fahrzeug 2 vorbeizufahren, so wie im Allgemeinen bei einem auf einer eigenen Fahrspur F stehenden vorderen Fahrzeug 2 verfahren wird.

Ist die Wartezeit, die das Fahrzeug 1 hinter dem vorderen Fahrzeug 2 auf dessen Anfahrvorgang wartet, nicht situativ angepasst, können Probleme für das automatisiert fahrende Fahrzeug 1 auftreten.

Insbesondere an Kreuzungen K mit einer Warteschlange, welche längere Wartezeiten erfordern, können zu Problemen für das Fahrzeug 1 führen, wenn dieses nach Ablauf der vorgegebenen Wartezeit beabsichtigt, das vordere Fahrzeug 2 zu umfahren, da die sich vor dem vorderen Fahrzeug 2 befindenden wartenden weiteren Fahrzeuge 3 von dem Fahrzeug 1 sensorisch nicht erfasst wurden. Das Fahrzeug 1 hat in diesem Fall die Warteschlange übersehen, leitet das Überholmanöver ein und kann aufgrund der stehenden weiteren Fahrzeuge 3 nicht vor dem vorderen Fahrzeug 2 einscheren und kann sich dadurch unter Umständen im Gegenverkehr befinden und somit ein erhebliches Verkehrsrisiko darstellen. Beispielsweise versucht das Fahrzeug 1 dann, die wartenden weiteren Fahrzeuge 3 zu umfahren, wodurch zumindest Unmut von Fahrzeugführern der weiteren Fahrzeuge 3 in Bezug auf das Fahrzeug 1 geschürt wird.

Im Folgenden wird ein Verfahren zur Bestimmung einer Aktionsstrategie des im automatisierten Fahrbetrieb fahrenden Fahrzeuges 1 bei einer Annäherung an ein auf seiner Fahrspur F stehendes vorderes Fahrzeug 2 beschrieben. Insbesondere sieht das Verfahren vor, die Aktionsstrategie für ein Umfahren des vorderen Fahrzeuges 2 individuell zu handhaben.

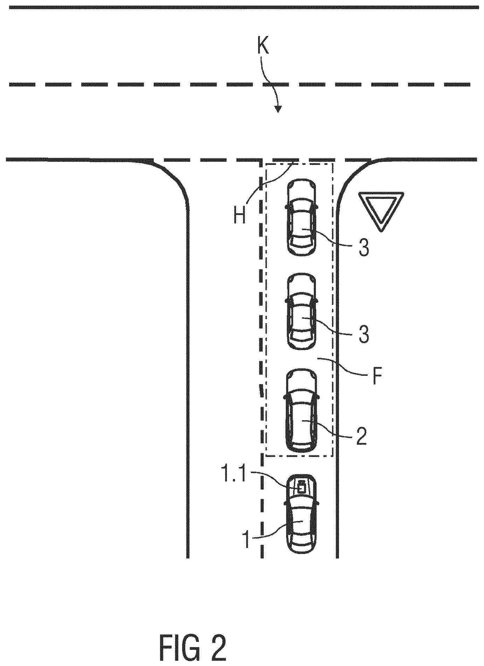

In Figur 2 ist die gleiche Verkehrssituation dargestellt, in welcher das Fahrzeug 1 auf das stehende vordere Fahrzeug 2 zufährt.

Insbesondere wird bei einem stehenden vorderen Fahrzeug 2, auf welches das Fahrzeug 1 zufährt, für vorgegebene Abstände des Fahrzeuges 1 und/oder des vorderen Fahrzeuges 2 zu einer Kreuzung K angenommen, dass es sich um eine Warteschlange handelt.

Die Warteschlange erstreckt sich von dem vorderen Fahrzeug 2 bis zu einer Haltelinie H an der Kreuzung K, an welcher ein weiteres Fahrzeug 3 wartet, um querende Verkehrsteilnehmer passieren zu lassen.

Anhand erfasster Signale eines Sensorsystems 1.1 des Fahrzeuges 1 ist es unter Umständen nicht möglich, ganzheitlich und zuverlässig zu erkennen, dass sich vor dem stehenden vorderen Fahrzeug 2 weitere Fahrzeuge 3 befinden. Beispielsweise können die weiteren Fahrzeuge 3 für das Sensorsystem 1.1 des Fahrzeuges 1 von dem vorderen Fahrzeug 2 verdeckt sein.

Aus diesem Grund ist es erforderlich, dass eine Umgebungssituation des Fahrzeuges 1 auf ein Vorliegen von Indizien hin überprüft wird, die daraufhin deuten, dass das vordere Fahrzeug 2 das Ende einer Warteschlange, d. h. einer zum Stehen gekommenen Reihe der weiteren Fahrzeuge 3 ist.

Ein mögliches Indiz stellt der Abstand des Fahrzeuges 1 und/oder des vorderen Fahrzeuges 2 zu der Kreuzung K dar. Generell ist bei einem vergleichsweise geringen Abstand des Fahrzeuges 1 zu einer Kreuzung K, an welcher Vorfahrt gewährt werden muss, eine erhöhte Wahrscheinlichkeit für eine Warteschlange zu verzeichnen. Durch Unterschreiten eines vorgegebenen Schwellwertes in Bezug auf den Abstand zu der Kreuzung K wird angenommen, dass das vordere Fahrzeug 2 und auch das Fahrzeug 1 Teil einer Warteschlange sind. Dadurch werden höhere Wartezeiten von dem Fahrzeug 1 in Kauf genommen, ohne dass eine andere Maßnahme eingeleitet wird. In einem solchen Fall wird eine übliche Wartezeit, die das Fahrzeug 1 auf ein Anfahren des vorderen Fahrzeuges 2 wartet, um einen Korrekturwert korrigiert, wodurch sich die Wartezeit erhöht.

Beispielsweise kann das Fahrzeug 1 in einer Ausführung des Verfahrens Informationen über eine Länge der Warteschlange und die Wartezeiten an Kreuzungen K von Flottenfahrzeugen einer Fahrzeugflotte, der das Fahrzeug 1 angehört, gesammelt werden. Diese Informationen in Bezug auf die Länge und Wartezeit wird dann bei einer Annäherung an das stehende vordere Fahrzeug 2 dazu verwendet, zu ermitteln, ob es sich um eine Warteschlange handelt und wie lange es dauern kann, bis das vordere Fahrzeug 2 anfährt oder bis das Fahrzeug 1 die Kreuzung K passieren kann.

Dazu kann das Fahrzeug 1 die entsprechenden Informationen von einer mit dem Fahrzeug 1 datentechnisch gekoppelten Rechnereinheit empfangen.

In einer alternativen oder zusätzlichen Ausführung wird die Wartezeit in Abhängigkeit von dem Fahrzeug 1 zur Verfügung stehenden Verkehrsinformationen ermittelt. Insbesondere wird anhand der Verkehrsinformationen eine Länge der Warteschlange ermittelt, wobei diese Verkehrsinformation beispielsweise über einen Verkehrsdienst und/oder Kartendienst an das Fahrzeug 1 übermittelt wird. Hierzu kann vorgesehen sein, dass momentan vorherrschende unterschiedliche Verkehrsdichten über Farben kodiert an das Fahrzeug 1 übermittelt werden und diese im Fahrzeug 1 entsprechend angezeigt werden. Beispielsweise signalisiert die Farbe Rot einen Stau, so dass es erforderlich sein kann, sich auf eine längere Wartezeit einzustellen. Von Verkehrsdiensten und/oder Kartendiensten zur Verfügung gestellte Verkehrsinformationen können derzeit sogar eine ausreichende Genauigkeit aufweisen, um beinah in Echtzeit derartige Warteschlangen von Fahrzeugen 1 bis 3 anzuzeigen.

Die Annahme, dass das stehende vordere Fahrzeug 2 ein Ende einer Warteschlange bildet, führt gemäß dem Verfahren dazu, dass ein Überholmanöver des Fahrzeuges 1, insbesondere zur Umfahrung des vorderen Fahrzeuges 2 gemäß einer maximalen Wartezeit unterdrückt wird, also nicht eingeleitet wird. Das Fahrzeug 1 reiht sich in die potentielle Warteschlange ein. Diese Wartezeit wäre allerdings länger, wenn das Fahrzeug 1 unterscheiden müsste, ob das vordere Fahrzeug 2 nur hält oder parkt.

Weist das vordere Fahrzeug 1 ein Fahrverhalten gemäß einer Stop-and-Go-Situation auf, stellt dies zusätzlich ein Indiz zur Annahme dar, dass das vordere Fahrzeug 2 ein bisheriges Ende einer Warteschlange bildet. Auch kann die Stop-and-Go-Situation des vorderen Fahrzeuges 2 als Bestätigung für das Vorhandensein einer dem Fahrzeug 1 vorausliegenden Reihe wartender weiterer Fahrzeuge 3, also einer Warteschlange, angesehen werden.

Im Fall, dass sich das Fahrzeug 1 versehentlich hinter einem vorderen Fahrzeug 2 einreiht, welches parkt und vor dem sich parkende weitere Fahrzeuge 3 befinden, und sich das automatisiert fahrende Fahrzeug 1 dadurch bezüglich einer Weiterfahrt in einer vergleichsweise ausweglosen Situation befindet, wird ein Teleoperator kontaktiert und Unterstützung von diesem angefordert. Der Teleoperator überprüft dann die vorliegende Situation und gibt Handlungsanweisungen an das Fahrzeug 1 aus, so dass dieses seinen Fahrbetrieb wiederaufnehmen kann. Hierbei ist es erforderlich, dass das geparkte vordere Fahrzeuge 2 und die geparkten weiteren Fahrzeuge 3 als Parkreihe in Form von Parkplätzen vor einer Kreuzung K in einer digitalen Karte aufgenommen und entsprechend gekennzeichnet werden. Somit wird auch eine Hypothese von geparkten Fahrzeugen 2, 3 herangezogen werden, um in einer solchen Situation eine passende Aktionsstrategie für das Fahrzeug 1 zu ermitteln und anzuwenden.

## Patentansprüche

1. Verfahren zur Bestimmung einer Aktionsstrategie eines im automatisierten Fahrbetrieb fahrenden Fahrzeuges (1) bei einer Annäherung an ein auf seiner Fahrspur (F) stehendes vorderes Fahrzeug (2),
wobei
- das Fahrzeug (1) hinter dem stehenden vorderen Fahrzeug (2) anhält und mit einer Fortsetzung seines Fahrbetriebes solange wartet, bis das vordere Fahrzeug (2) anfährt oder bis eine vorgegebene Wartezeit überschritten wird,
- die vorgegebene Wartezeit unter Berücksichtigung eines Abstands des Fahrzeugs (1) zu einer Kreuzung (K) ermittelt wird, wobei angenommen wird, dass sich vor dem vorderen Fahrzeug (2) eine Reihe weiterer Fahrzeuge (3) befindet, wenn der Abstand des Fahrzeugs (1) zu der Kreuzung (K) einen vorgegebenen Schwellwert unterschreitet, und wobei die vorgegebene Wartezeit vergrößert wird, wenn diese Annahme getroffen wird,
- das Fahrzeug (1), wenn ein Warten des Fahrzeuges (1) die vorgegebene Wartezeit überschreitet,
- ein Überholmanöver zum Überholen des vorderen Fahrzeuges (2) einleitet,
- eine Unterstützung durch einen Teleoperator anfordert und/oder
- eine Übernahmeaufforderung einer Fahraufgabe an einen Fahrzeugnutzer des Fahrzeuges (1) ausgibt.

2. Verfahren nach Anspruch 1,
**dadurch gekennzeichnet, dass** die vorgegebene Wartezeit in Abhängigkeit von einer
Umgebungssituation des Fahrzeuges (1) vorgegeben wird.

3. Verfahren nach Anspruch 1 oder 2,
**dadurch gekennzeichnet, dass** eine Umgebungssituation auf ein Vorliegen von Indizien hin überprüft wird, die daraufhin deuten, dass das vordere Fahrzeug (2) das Ende einer zum Stehen gekommenen Reihe von weiteren Fahrzeugen (3) bildet.

4. Verfahren nach Anspruch 3,
**dadurch gekennzeichnet, dass** bei Auffinden derartiger Indizien ein Korrekturwert für die vorgegebene Wartezeit in Abhängigkeit der aufgefundenen Indizien bestimmt wird und die
Wartezeit für das Fahrzeug (1) um den Korrekturwert verlängert wird.

5. Verfahren nach einem der vorhergehenden Ansprüche,
**dadurch gekennzeichnet, dass** die vorgegebene Wartezeit in Abhängigkeit von dem Fahrzeug (1)
zur Verfügung stehender Verkehrsinformationen ermittelt wird.

6. Verfahren nach einem der vorhergehenden Ansprüche,
**dadurch gekennzeichnet, dass** dem Fahrzeug (1) über eine Fahrzeug-zu-Fahrzeugkommunikation und/oder über eine Fahrzeug-zu-Infrastrukturkommunikation Informationen zu einer Länge der Reihe der wartenden weiteren Fahrzeuge (3) und/oder eine Länge einer prognostizierten Wartezeit übermittelt werden.

## Claims

1. Method for determining an action strategy of a vehicle (1) driving in automated driving mode when approaching a vehicle (2) in front that is stationary in its lane (F), wherein
- the vehicle (1) stops behind the stationary vehicle (2) in front and waits before continuing driving until the vehicle (2) in front starts moving or until a specified waiting time is exceeded,
- the specified waiting time is determined taking into account a distance of the vehicle (1) to an intersection (K), wherein it is assumed that there is a row of other vehicles (3) in front of the vehicle (2) in front if the distance of the vehicle (1) to the intersection (K) falls below a specified threshold value, and wherein the specified waiting time is increased if this assumption is made,
- if the waiting time of the vehicle (1) exceeds the specified waiting time, the vehicle (1)
- initiates an overtaking maneuver to overtake the vehicle in front (2),
- requests support from a teleoperator and/or
- issues a request to take over a driving task to a vehicle user of the vehicle (1).

2. Method according to claim 1,
**characterized in that** the specified waiting time is specified depending on an environmental situation of the vehicle (1).

3. Method according to either claim 1 or claim 2,
**characterized in that** an environmental situation is checked for the presence of indications which suggest that the vehicle (2) in front forms the end of a row of other vehicles (3) that have come to a stop.

4. Method according to claim 3,
**characterized in that** if such indications are found, a correction value for the specified waiting time is determined depending on the indications found and the waiting time for the vehicle (1) is extended by the correction value.

5. Method according to any of the preceding claims,
**characterized in that** the specified waiting time is determined depending on the traffic information available to the vehicle (1).

6. Method according to any of the preceding claims,
**characterized in that** information on a length of the row of other waiting vehicles (3) and/or a length of a predicted waiting time is transmitted to the vehicle (1) via vehicle-to-vehicle communication and/or via vehicle-to-infrastructure communication.

## Revendications

1. Procédé permettant de déterminer une stratégie d'action d'un véhicule (1) conduit en fonctionnement de conduite automatisée lors d'un rapprochement d'un véhicule précédent (2) à l'arrêt sur sa voie de circulation (F),
dans lequel
- le véhicule (1) s'arrête derrière le véhicule précédent (2) à l'arrêt et attend pour poursuivre son fonctionnement de conduite que le véhicule précédent (2) démarre ou qu'un temps d'attente prédéfini soit dépassé,
- le temps d'attente prédéfini est déterminé en prenant en compte une distance entre le véhicule (1) et un carrefour (K), dans lequel on suppose qu'une file d'autres véhicules (3) se trouve devant le véhicule précédent (2) lorsque la distance entre le véhicule (1) et le carrefour (K) n'atteint pas une valeur seuil prédéfinie, et dans lequel le temps d'attente prédéfini est augmenté lorsque ladite supposition est faite,
- le véhicule (1), lorsqu'une attente du véhicule (1) dépasse le temps d'attente prédéfini,
- entame une manœuvre de dépassement pour le dépassement du véhicule précédent (2),
- demande une assistance par un téléopérateur, et/ou
- délivre un ordre de prise en charge d'une tâche de conduite à un utilisateur de véhicule du véhicule (1).

2. Procédé selon la revendication 1,
**caractérisé en ce que** le temps d'attente prédéfini est prédéfini en fonction d'une situation d'environnement du véhicule (1).

3. Procédé selon la revendication 1 ou 2,
**caractérisé en ce qu'une** situation d'environnement est examinée en vue d'une présence d'indices qui indiquent que le véhicule précédent (2) forme la fin d'une file d'autres véhicules (3) à l'arrêt.

4. Procédé selon la revendication 3,
**caractérisé en ce que,** lorsque de tels indices sont repérés, une valeur de correction pour le temps d'attente prédéfini est déterminée en fonction des indices repérés et le temps d'attente pour le véhicule (1) est prolongé de la valeur de correction.

5. Procédé selon l'une des revendications précédentes,
**caractérisé en ce que** le temps d'attente prédéfini est déterminé en fonction d'informations routières mises à disposition du véhicule (1).

6. Procédé selon l'une des revendications précédentes,
**caractérisé en ce que** des informations concernant une longueur de la file des autres véhicules (3) en attente et/ou une longueur d'un temps d'attente pronostiqué sont transmises au véhicule (1) par l'intermédiaire d'une communication de véhicule à véhicule et/ou par l'intermédiaire d'une communication de véhicule à infrastructure.
